(19) Europäisches Patentamt / European Patent Office / Office européen des brevets

(11) **EP 4 301 808 B1**

(12) **EUROPEAN PATENT SPECIFICATION**

(45) Date of publication and mention
of the grant of the patent:
**23.04.2025 Bulletin 2025/17**

(21) Application number: **22711612.6**

(22) Date of filing: **01.03.2022**

(51) International Patent Classification (IPC):
*C08J 11/16* (2006.01)     *C10B 53/07* (2006.01)
*C10G 1/08* (2006.01)

(52) Cooperative Patent Classification (CPC):
**C10B 53/07; C10G 1/086; C10G 1/10;** C08J 11/12;
C08J 11/16; C08J 2319/00; Y02W 30/62

(86) International application number:
**PCT/IB2022/051799**

(87) International publication number:
**WO 2022/185205 (09.09.2022 Gazette 2022/36)**

(54) **A PROCESS FOR THE TREATMENT OF WASTE TYRES**

**VERFAHREN ZUR BEHANDLUNG VON ALTREIFEN**

**PROCÉDÉ DE TRAITEMENT DE PNEUS USÉS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2021 IT 202100004901**

(43) Date of publication of application:
**10.01.2024 Bulletin 2024/02**

(73) Proprietor: **Politecnico di Milano**
**20133 Milano (IT)**

(72) Inventor: **MANENTI, Flavio**
**20133 Milano (IT)**

(74) Representative: **Perani & Partners S.p.A.**
**Piazza Armando Diaz, 7**
**20123 Milano (IT)**

(56) References cited:
**WO-A1-2020/234709     US-A1- 2006 116 431**
**US-A1- 2020 181 372**

EP 4 301 808 B1

## EP 4 301 808 B1

**Description**

*Field of the Invention*

The present invention relates to a process for treating tyres and for their chemical conversion into products of high commercial value.

*Background art*

One of the main problems for the circular economy is the recovery of plastic waste (plasmix). Plasmix is a complex mixture of polymers of different nature and origin, mainly linear-branched such as Polyethylene (PE) and Polypropylene (PP) and with a reduced content of aromatic polymers such as Polystyrene (PS) and Polyethylene Terephthalate (PET). Otherwise, *plasmix* can comprise chlorinated plastics (PolyVinylChloride, PVC) or PolyCarbonates (PC) or PolyAmides (for example PolyMethylMetAcrylate, PMMA), as well as other types of plastics and waste of different kinds such as metals, sand or stones. An example of a possible composition is given in the following table

Table 1. Composition of plasmix (source COREPLA).

| Polymer | % m/m |
|---------|-------|
| PE | 40-50 |
| PP | 20-30 |
| PS | 10-20 |
| PET | 5-10 |
| PVC | 2-5 |
| OTHER | 5-15 |

Such plastics are currently recovered mainly by mechanical means, which however reduces their value and limits their use. For these reasons, some chemical processes are also known that involve pyrolysis operations, carried out in the absence of oxygen, or gasification, carried out in the absence of oxygen. However, such chemical recovery technologies have limitations for different areas of application.

In particular, the known processes do not allow tyres to be chemically recovered in a sustainable, economical and efficient manner. The reasons lie in the significant presence of sulphur, used in the tyre vulcanization process. In thermal chemical conversion processes such as pyrolysis and gasification, but also in catalytic processes, sulphur leaks from the vulcanized matrices mainly in the form of $H_2S$. Therefore, the known treatment technologies firstly have safety problems for the operators and for the environment since $H_2S$ inhibits the nasal sensors already in reduced quantities (of the order of 100 ppm) and in hardly higher quantities it becomes lethal for humans. Secondly, such processes involve management problems of the $H_2S$ that is formed, which is energetically intensive; it is released in the form of gas by reaction with a considerable amount of hydrogen according to the following reaction mechanism:

$$[-CH_2-]n-S-[-CH_2-]m + H_2 = [-CH_2-]n^* + [-CH_2-]m^* + H_2S$$

where m and n indicate non-identical lengths of the macromolecules in terms of carbon atoms and the asterisk indicates a possible unsaturation (double bond -C=C-). In addition, the removal of sulphur requires one hydrogen molecule for each "bridging" sulphur atom between two hydrocarbon macromolecules or between two parts of the same macromolecule. Sometimes, the possible unsaturation is in turn saturated by an additional hydrogen molecule:

$$[-CH_2-]n^* + [-CH_2-]m^* + H_2 = [-CH_2-]n + [-CH_2-]m$$

with additional loss of hydrogen and a significant impact on costs and the environment (where hydrogen does not have a green origin).

The need is therefore felt to have a process for the treatment of plastic polymeric material deriving from tyre waste which is economically convenient and at the same time allows to minimize unwanted products as well as to convert this polymeric material into commercial products of high value, favouring the circular economy and without any expense in terms of hydrogen consumption.

Examples of known processes related to devulcanization processes are described in documents US 2006116431 A1 and US 2020181372 A1. Specifically, document US4200611631 envisages the addition, after grinding and prior to the devulcanization step, of a swelling solvent and a precursor of the devulcanization catalyst of the rubber.
With respect to US372, this describes a further process for the devulcanization of thermosetting rubber obtained by mixing pulverized rubber and a thermoplastic polymer, a main chain backbone protecting antidegradant (in other words, sterically hindered phenols, quinones, alkylphenylamines, dialkylphenylenediamines, alkylarylphenylenediamines, and polymerized trimethylquinoline, which prevent further degradation of the polymers), a green strength enhancer, and a devulcanization promoter, i.e., an oxide of a metal supported on an inorganic material together with endcapping reagents.

*Summary of the invention*

In order to overcome the aforesaid problems, a process has been designed that allows the chemical recovery of tyres, allowing their high-efficiency conversion into high value-added chemicals in addition to reducing the waste produced and maintaining a high degree of safety.
The object of the present invention is therefore a process for the chemical treatment of scrap tyres, as according to claim 1.

LIST OF FIGURES

Figure 1: block diagram of the process and the relative units of a plant in which such a process is achievable according to a first embodiment of the present invention;
Figure 2: block diagram of the process and the relative units of a plant in which such a process is achievable according to a second embodiment of the present invention;
Figure 3: block diagram of the process and the relative units of a plant in which such a process is achievable according to a third embodiment of the present invention;
Figure 4: block diagram of the process and the relative units of a plant in which such a process is achievable according to a fourth embodiment of the present invention;
Figure 5: block diagram of the process and the relative units of a plant in which such a process is achievable according to a fifth embodiment of the present invention;
Figure 6: block diagram of the process and the relative units of a plant in which such a process is achievable according to a sixth embodiment of the present invention;
Figure 7: block diagram of an embodiment of the oven, in which the thermal splitting of hydrogen sulphide of the process according to the present invention occurs;
Figure 8: block diagram of a second embodiment of the oven for conducting the thermal splitting reaction of hydrogen sulphide of the process according to the present invention;
Figure 9: block diagram of the thermal splitting step of hydrogen sulphide of the process according to the present invention;
Figure 10: block diagram of an embodiment of an oven in which the catalytic splitting of hydrogen occurs;
Figure 11: block diagram of the step of the catalytic splitting process according to the present invention;
Figure 12: block diagram of an embodiment of a plant in which step d) of the process of the invention is conducted, and in which said step d) comprises a gasification of the devulcanized polymer, hydrogenation of said polymer, steam reforming or reforming of methane, all self-sustained by the combustion of the desulphurized polymer;
Figure 13: representation of a second embodiment of a plant in which step d) of the process of the invention is conducted, according to the operating methods shown for figure 12;
Figure 14: block diagram of a third embodiment of a plant in which step d) of the process of the invention is conducted, according to the operating methods shown in the description of figure 12;
Figure 15: block diagram of a fourth embodiment of a plant in which step d) of the process of the invention is conducted, according to the operating methods shown in the description of figure 12;
Figure 16: block diagram of a plant for the achievement of a process step in accordance with a fifth embodiment of the present invention;
Figure 17: block diagram of a plant for the achievement of a process step in accordance with a fifth embodiment of the present invention.

DETAILED DESCRIPTION

For the purposes of the present invention, the definition "process comprising" does not exclude the presence of additional steps beyond the step expressly mentioned after such a definition.

The definition "Process constituted" and "consisting of" excludes the presence of further steps in addition to those expressly mentioned.

With the process of the invention it is thus possible to obtain products of value, intended as:

- linear or branched light or higher boiling saturated or unsaturated, paraffinic or naphthenic/aromatic hydrocarbons (pyrolysis processes);
- Syngas with different S ratios (H2 over CO and CO2) in the simultaneous presence of light hydrocarbons and olefins;
- chemicals with high added value such as: methanol, dimethyl ether, acetic acid if appropriately combined with chemical synthesis processes (mainly for gasification) and/or reforming (mainly for pyrolysis processes).

The process according to the present invention makes it possible to remove the sulphur from vulcanized plastics, whether they come from tyres or not, to prepare the desulphurized waste plastics for chemical recovery treatments and to use the hydrogen obtained by thermally splitting the hydrogen sulphide formed in the desulphurization reaction

The process in accordance with the present invention also allows an energy recovery to self-sustain the initial pre-treatment steps of the vulcanized plastic (melting and dehalogenation).

For the purposes of the present invention, scrap tyres can fall within the definition of a plasmix with a relevant sulphur content. An example of the chemical composition of the tyres is shown in the table below.

| Component | %weight |
|---|---|
| Rubber (natural or synthetic) | 41 |
| Additives (carbon black, chalk...) | 30 |
| Reinforcing fibres (nylon, rayon, metal) | 15 |
| Plasticizers (oils, resins) | 6 |
| Vulcanizers (sulphur, zinc oxide) | 6 |
| Anti-ageing | 2 |

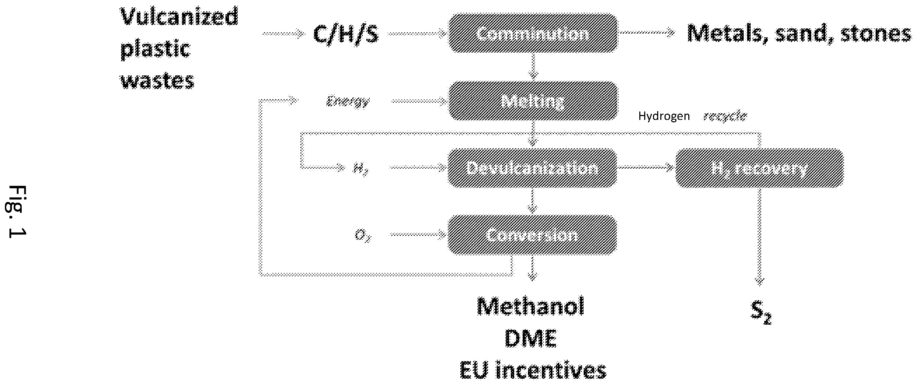

In other words, the tyres are representable at the elementary level as a mixture of carbon, hydrogen and sulphur (C/H/S as indicated in figures 1-6).

The process comprises a first step a) of tyre grinding, referred to as COMMINATION in figures 1-6. The vulcanized plastic of the tyres is ground by systems known to those skilled in the art. In this step a) the inorganic material present in the plastic which could cause disturbances in the subsequent process steps is also removed. Among the inorganic materials, for example, there can be residues of sand, glass, metals, stones, etc.

The process comprises a subsequent step b) of melting the material coming from step a) specifically the vulcanized plastic ground and cleaned of inorganic residues, indicated with MELTING in the figures. The plastic from step a) is supplied to a melter capable of melting it at temperatures above 200°C, preferably above 250°C.

The process comprises a subsequent step c) of devulcanizing the molten material from step b). Such devulcanization takes place according to the reaction R1:

$$\text{R1:} \qquad [-CH_2-]n\text{-}S\text{-}[-CH_2-]m + H_2 = [-CH_2-]n^* + [-CH_2-]m^* + H_2S$$

where m and n indicate non-identical lengths of the macromolecules in terms of carbon atoms and the asterisk indicates the possible presence of at least one olefin unsaturation. Possibly the R1 reaction is associated with the saturation reaction R2 of the at least one olefin unsaturation:

$$\text{R2:} \qquad [-CH_2-]n^* + [-CH_2-]m^* + H_2 = [-CH_2-]n + [-CH_2-]m$$

Preferably, in step c) the slurry reagent comprising plastics and added with catalyst is reacted with hydrogen.

The catalyst used shall withstand poisoning by sulphur and sulphurized organic compounds and shall withstand the presence of light and heavy, paraffinic, naphthenic or aromatic hydrocarbons.

The catalysts used in step c) are selected from cobalt oxide or molybdenum oxide possibly supported on alumina.

According to a preferred embodiment, step c) is conducted at a temperature comprised between 300 and 350°C, between 50 and 100 bar. The above temperature range was chosen to promote the activation of the catalysts while avoiding significant degradation of the polymer chains (and to prevent the formation of high concentrations of hydrocarbons together with the leakage of $H_2S$). On the other hand, regarding the pressure ranges, these favour hydrogenation as a function of the increase in pressure itself.

Step c) is carried out in a homogeneous or heterogeneous fixed or mobile bed reactor (fluidized or dragged).

Thus, in the devulcanization of step c) $H_2S$ is produced which, according to the present invention, is transformed into sulphur and hydrogen and the latter is recycled to the same devulcanization step c).

This step is also called splitting, which follows the reaction pattern R3

$$R3: H_2S = H_2 + 1/x\ S_x$$

shown in figures 1-6, with $H_2$ RECOVERY or SACS or SATS.

The products thus obtained can be reused. Specifically, the formed hydrogen is recycled to step c). Instead, the sulphur obtained can be treated and used in other plants (e.g., new vulcanizations, sulphuric acid production).

According to a preferred embodiment, the elemental sulphur can be separated from the hydrogen by condensation.

In the case where the unreacted $H_2S$ is present from the splitting reaction, this can be separated by softening processes and the hydrogen is recycled to step c).

Furthermore, the unreacted $H_2S$ can also be recycled internally to the hydrogen recovery unit for complete recovery. In case of small quantities of $H_2S$ present in the hydrogen stream leaving the splitting step, it is possible to recycle the same stream at step c). It should be noted that low percentages of input $H_2S$ do not significantly affect yields or related operations.

Therefore, after adequate initial feeding of hydrogen to step c), for example by the use of cylinders, the invention is thus able to self-sustain, solving one of the main problems of chemical devulcanization, namely the consumption of large amounts of hydrogen.

According to a preferred embodiment, the splitting reaction R3 is thermal or can be catalysed. It should be noted that the splitting reaction R3 can also be carried out by electrochemical means.

Specifically, the present invention has several methods of implementation as shown in the figures, in which the step of splitting and relative recovery of hydrogen is carried out by the following means of technology:

- SATS (Sulphidric Acid Thermal Splitting) capable of performing reaction R3 by thermal means and of separating the hydrogen to be recycled from elemental sulphur and any unreacted $H_2S$. This technology is the subject of international patent application number WO2020/234708 A1;
- SACS (Sulfidric Acid Catalytic Splitting) capable of performing reaction R3 catalytically and separating the hydrogen to be recycled from elemental sulphur and any unreacted H2S. This technology is the subject of international patent application number WO 2020/234709 A1.

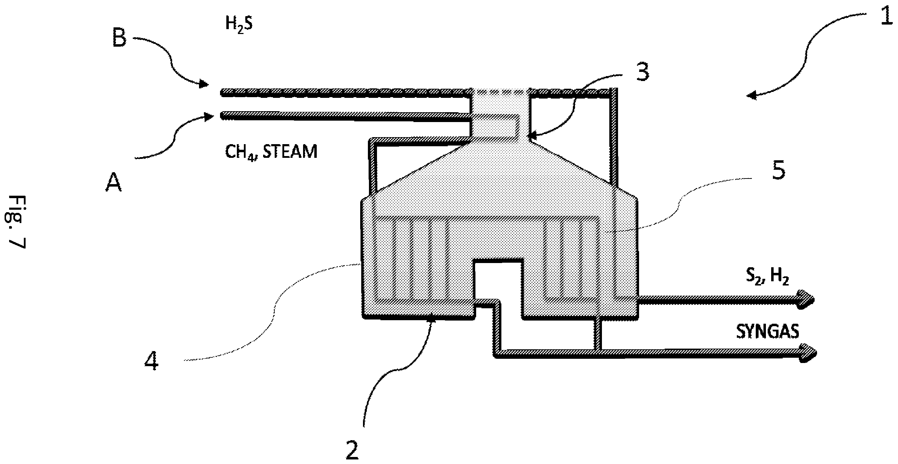

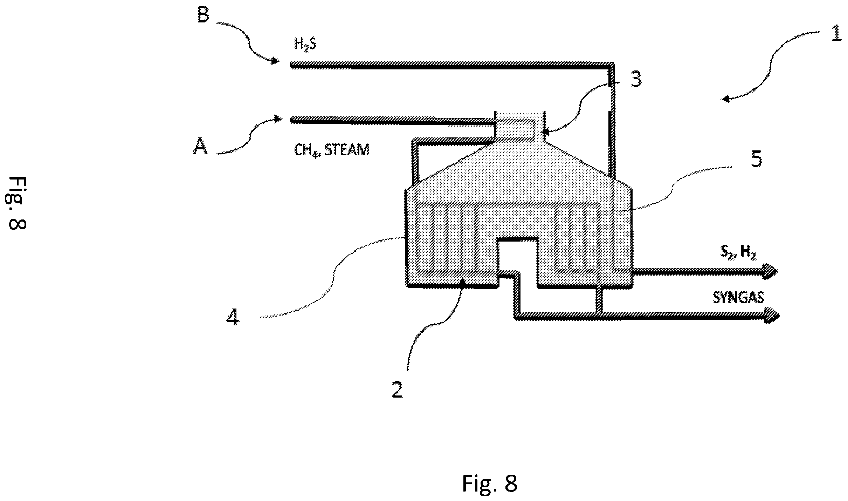

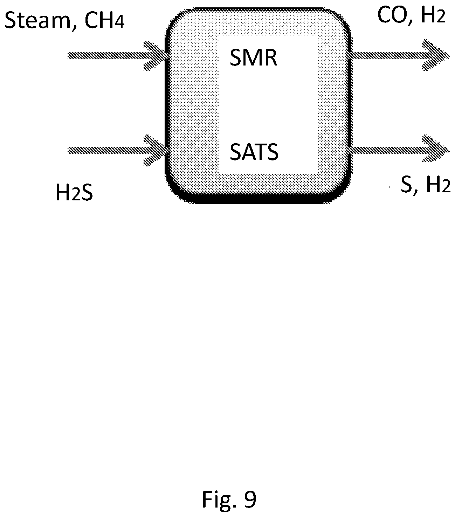

In the case where the splitting reaction R3 is of the thermal SATS type (figure 7, 8 and 9), this is carried out in an oven 1 comprising a radiant zone 2 and a convective zone 3. The oven further comprises a first 4 and a second 5 set of tubes in which at least two segregated process flows of gas A and B pass respectively. It should be noted that the first set of tubes 4 is provided with a catalyst while the second set of tubes 5 is made of material resistant to acidic gases.

The oven 1 is arranged so that the first process flow A enters the oven 1 from the convective zone 3 and passing through the first set of tubes 4 exits the oven from the radiant zone 2. Alternatively, the first process flow A enters the oven 1 from the radiant zone 2 and, passing through the first set of tubes 4, exits the radiant zone 2. Instead, the second process flow B enters the oven 1 from the convective zone 3 or the radiant zone 2 and, passing through the second set of tubes 5, exits from said oven 1 from the radiant zone 3. In detail, the second flow B entering the oven comprises hydrogen sulphide passing through said second set of tubes 5, where the reaction R3 (SATS) occurs at the radiant zone 2, while the flow A comprising methane and water, passes through said first set of tubes 4, said first set of tubes comprising a tube bundle filled with catalyst and arranged at the radiant zone 2, where the reaction R4 (SMR: Steam Methane Reformer) is carried out.

$$R4: \qquad CH_4 + H_2O = CO + 3H_2$$

Preferably, the reaction R3 is in the ranges of preferred temperatures and pressures contemplated in the aforesaid WO2020/234708 A1.

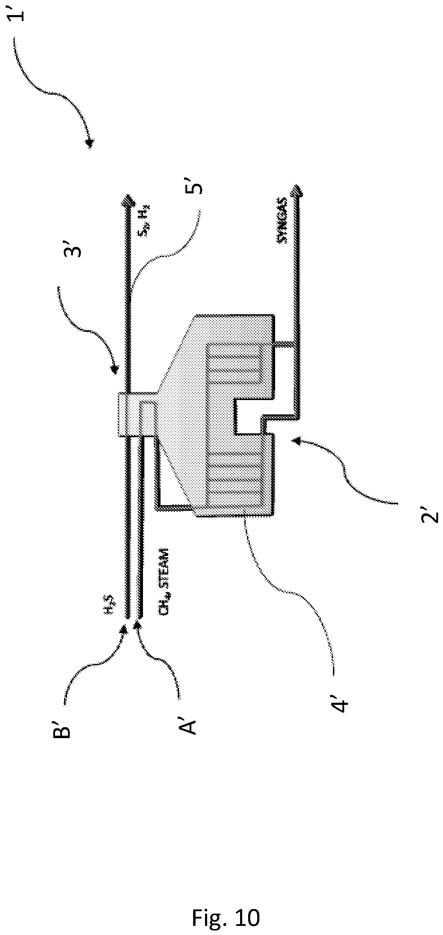

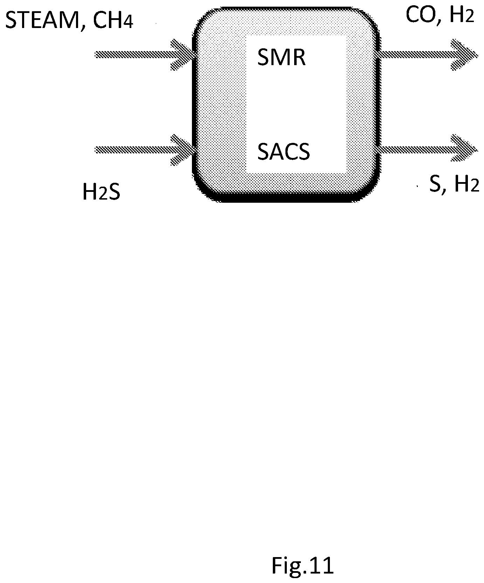

In the case in which the splitting reaction R3 is of catalytic SACS type (figures 10 and 11) this is carried out in an oven comprising a radiant zone 2' and a convective zone 3'. The oven further comprises a first 4' and a second 5' set of tubes, in which two segregated gas process flows A' and B' respectively pass. Specifically, the second set of tubes 5' is made of acid gas-resistant material and is provided with a catalyst.

The oven 1' is arranged so that the first process flow A' enters the oven 1' from the convective zone 3' and, passing through the first set of tubes 4', exits said oven from the radiant zone 2'. Alternatively, the first process flow A' enters the oven 1' from the radiant zone 2' and, passing through the first set of tubes 4', exits the oven from the radiant zone 2'. Instead, the process flow B', enters said oven 1' from the convective zone 3' passing through said second set of tubes 5' and exits from the oven 1' from the convective zone 3'. It should be noted that the second flow B' comprising $H_2S$ passes into the second set of tubes 5', where, at the convective zone 3', the reaction R3 (SACS) is carried out. Instead, the flow A' comprising methane and water, passes through the first set of tubes 4', comprising a tube bundle filled with catalyst and arranged near the radiant zone 2'. In the first set of tubes 4', the reaction R4 (SMR) is carried out

$$R4: \qquad CH_4 + H_2O = CO + 3H_2$$

Preferably, the reaction R3 is carried out in the preferred pressure and temperature ranges contemplated in WO 2020/234709 A1.

For the purposes of the present invention, it should be noted that the oven 1, 1' comprises an upper convective zone, 3' where the heat exchange takes place by convection. The lower part, defined radiant zone, 2', comprises a firebox with one or more vertical and/or horizontal burners, configured to radiate the sets of tubes. The convective zone in which the process flow enters the oven is heated by convection through the exhaust gases produced in the radiant zone by combustion of combustible gases. Thereby, the inlet gas process flow undergoes a preheating step.

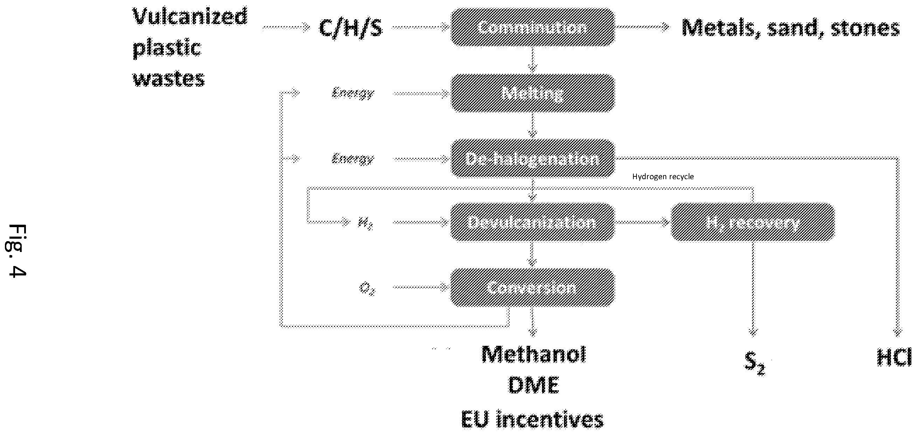

According to a preferred embodiment, if there is a marked presence (a few percent) of PVC contained in the tyre compounds or in the devulcanizing plastic material, the process can comprise a de-halogenation step b'), indicated in the figures with DE-HALOGENATION (figures 4, 5, and 6). Such a step b') inserted in the process after the melting step b) and before the devulcanization step c) allows to manage plastics with high PVC content. Preferably, step b') is a dechlorination step with the formation of hydrochloric acid according to the reaction R5

$$R5: \qquad 2\,HCl = H_2 + Cl_2$$

Such a step is carried out if it is desired to chemically convert the tyre rubber with the conventional-type waste plastic (plasmix).

In accordance with a preferred embodiment, step b') is preferably of a homogeneous non-catalytic type.

Preferably, said step b') is carried out at a temperature comprised between 300 and 350°C at residence times greater than 3 minutes, preferably comprised between 5 and 10 minutes. Thereby, using a temperature range similar to that of step c), the marked thermal degradation of the plastic macromolecules is avoided while allowing the HCl to escape as a gas from the liquid phase without excessive dragging of hydrocarbons.

More preferably, the pressure at step b') can be significantly lower than the pressure expected for devulcanization step c) and is at 1 bar or a little higher or at a pressure of a few bar. For these reasons, downstream of the de-halogenator in which step b') occurs, it is therefore necessary to provide a pumping system for melted and de-halogenated plastics to bring the fluid to the operating pressures of the devulcanizer (10-150 bar) in which step c) occurs. The operating temperatures of step b') as well as of the previous and subsequent steps make the molten plastics very fluid and not very viscous, allowing to significantly save the operating costs of pumping. It should be noted that temperatures closer to 350 °C are preferable.

During step b') no marked sulphur and sulphurized compound release phenomena occur due to the absence of a specific catalyst as well as hydrogen. There are also no marked thermal degradations of the polymer chains. The release of gaseous HCl occurs according to the following reaction:

$$[-CH_2-CHCl-]n = [-CH=CH-]n + HCl$$

The recovery of HCl in a single unit allows to use precious materials limited to such a unit in the construction of the equipment, with significant savings. The HCl removed from the plastics and separated by phase is then purified to the quality required by the market. Although with modest market value, it represents an additional process product.

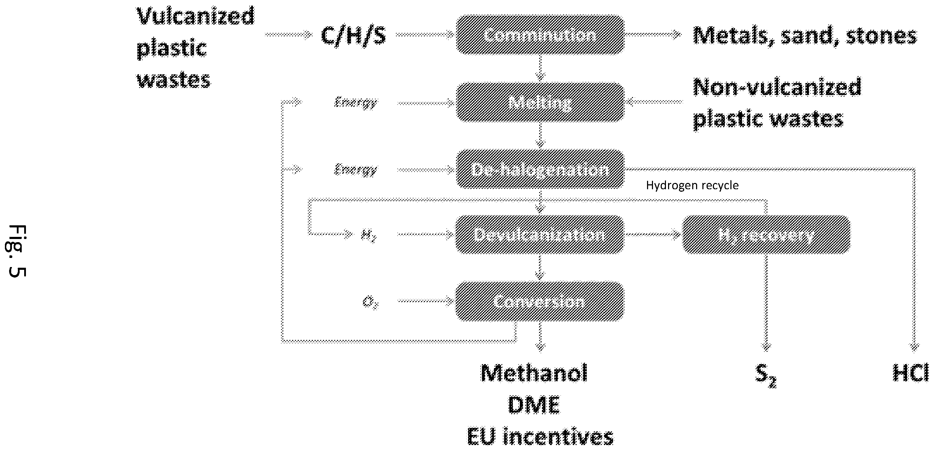

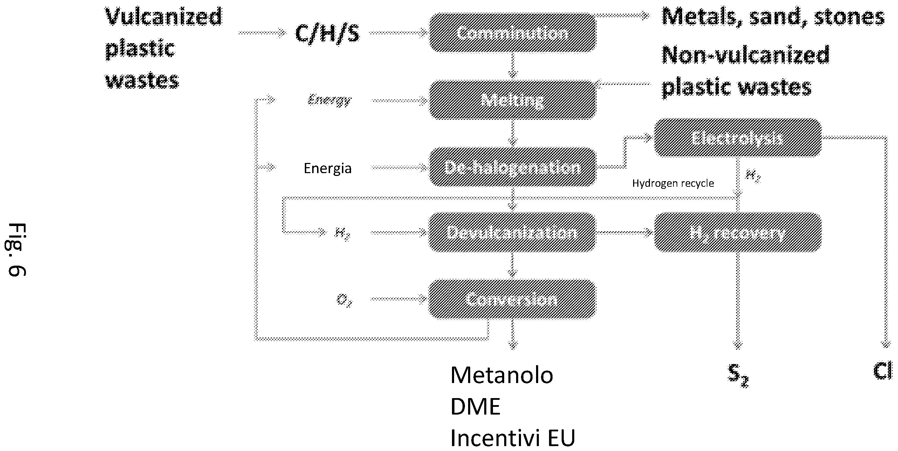

It should be noted that de-halogenation step b') becomes necessary where it is desired to chemically convert the tyre plastic together with the classic plasmix (figures 5 and 6), which contains 2-4% Polyvinylchloride (PVC). Therefore, in this case plasmix is supplied to the melter, in step b) of melting. Specifically, the unvulcanized plastic can be supplied to the melter, together with the vulcanized plastic, and passed in series from the de-halogenator for the removal of hydrochloric acid, and subsequently into the devulcanizer, in other words passing through steps b') and c).

According to an alternative embodiment, step b') and c) with the related de-halogenators and devulcanizers can be envisaged on parallel lines and flow downstream thereof in a single premixed flow before conversion step d) described in detail below. In the case where the mixture of unvulcanized plastics does not have halogens in significant quantities, it is possible to supply the flow just upstream of the unit where conversion step d) occurs, after melting in an additional melter. Such a solution allows to reduce the volumes involved in step c) as well as in the devulcanization unit.

According to a preferred embodiment, the HCl, preferably extracted at step b') is subjected to electrolysis to obtain hydrogen which is added in step c) and $Cl_2$ (figure 6). Specifically, an electrified integration for hydrolysis of HCl is envisaged. Thereby, it is possible to further increase the market value of the products as well as to increase the availability/production of hydrogen. It should be noted that the hydrolysis of HCl occurs with lower energy expenditure than the electrolysis of water according to the reaction:

$$2\ HCl = H_2 + Cl_2$$

The electrolysis unit is known to be particularly energetic, although to a lesser extent for chlorine with respect to water, but the usually small amount of HCl with respect to the process flow rates allow an easy energy integration with renewable systems (e.g., photovoltaic and wind). Thereby, the process allows to obtain good yields of the products at low costs.

As anticipated, the process according to the present invention comprises a step d) of converting plastics from step c) into products of commercial value. The chemical conversion carried out in step d) involves receiving the molten plastic flow cleaned from the sulphur fraction and suitably freed from the devulcanization catalyst. Such a molten mixture is further heated to temperatures greater than 350°C, preferably to temperatures greater than 400°C and, more preferably, especially to reduce residence times and operating volumes, to temperatures greater than 450°C. According to alternative embodiments, the temperatures used can be greater than 450°C in the case of oxygen gasification (oxy-gasification) or gasification systems, for which an oxygen stream is included, or a mixture of oxygen (e.g., air or enriched air) or oxygenated molecules (e.g., $CO_2$, steam).

The products exiting step d) and the relevant conversion unit comprise products of commercial value such as:

- linear or branched light or higher boiling saturated or unsaturated, paraffinic or naphthenic/aromatic hydrocarbons (pyrolysis processes);
- Syngas with different S ratios ($H_2$ over CO and CO2) in the simultaneous presence of light hydrocarbons and olefines;
- chemicals with high added value such as: methanol, dimethyl ether, acetic acid if appropriately combined with chemical synthesis processes (mainly for gasification) and/or reforming (mainly for pyrolysis processes).

Furthermore, it should be noted that, depending on the output temperatures of the products, the hot stream can be used as an energy integration in the previous steps of melting, de-halogenation and in some cases also for devulcanization. Specifically, the energy integration occurs in the steps where heating is required.

The conversion step can be performed in accordance with different operating modes which can be combined with the aforesaid SATS and SACS operating modes. Specifically, step d) can be accomplished by:

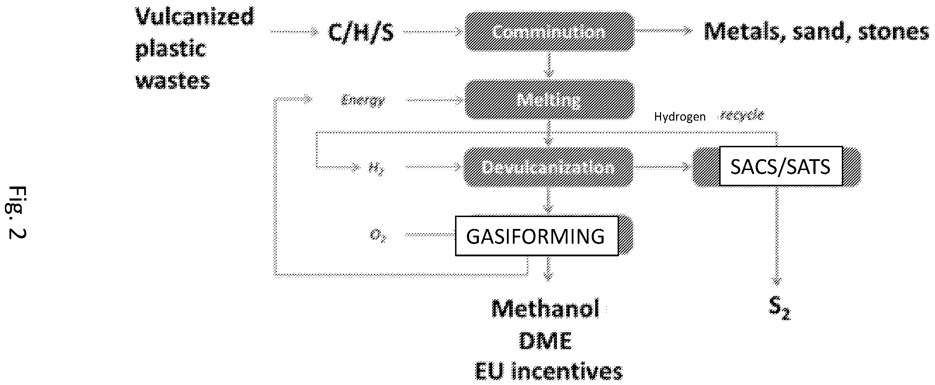

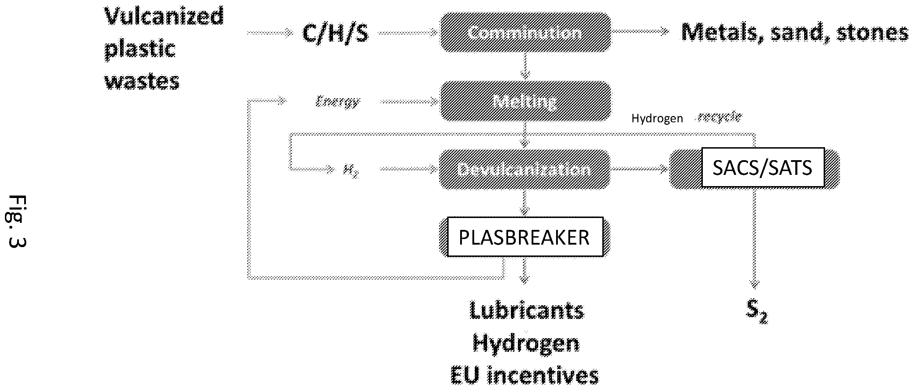

- gasification, indicated in figure 2 as GASIFORMING. In other words, the conversion system characterized by a gasification associated with hydrogenation and reforming is able to convert the mixtures of plastic waste into syngas and, therefore, into hydrogen or methanol or dimethyl ether. Such a technology is the subject of international patent application WO2021/019433 A1;
- pyrolysis, referred to in figure 3 as PLASBREAKER, in other words, a process in which the final step is a liquid phase pyrolysis capable of converting plastics into (partially) hydrofinished lubricant bases and hydrogen. Such technology is the subject of Italian patent application No. 102020 000019951.

It should be noted that while gasification requires oxygen, pyrolysis is carried out without an initial supply of oxygen. A further difference between the two types of conversion is the outlet temperature of the products. Specifically, in the case of pyrolysis, the temperatures of 400-500°C, but also up to 700°C for gas phase pyrolysis systems, allow an energy recovery in melting step b) using the thermal energy of the effluents to melt the plastic. Regarding the case of gasification, the temperatures of the products being in a wider temperature range (750-1100°C) allow a greater energy recovery by passing the flow of hot products, for example, to the splitting unit and then to the unit where the melting occurs or directly to the unit where the melting occurs. Furthermore, in the case of the gasification being the product flow with greater enthalpy, this can also be used for the de-halogenation unit as well as for the previous units.

According to a preferred embodiment illustrated in figure 2, the conversion step is carried out according to the following steps, especially when the commercial product to be obtained is syngas possibly associated with higher hydrocarbons:

A) gasification of the pretreated polymers according to the following reaction scheme R6:

$$R6: \qquad [-CH_2-] + H_2O = CO + 2H_2$$

B) hydrogenation of said polymers pretreated with higher hydrocarbons and methane with the hydrogen produced in R6, according to the following reaction scheme R7:

$$R7: \qquad [-CH_2-] \, n + H_2 = Cn \, H(2n+2);$$

wherein n is an integer from 1 to 3, said reaction R7 possibly being combined with oligomer and olefin formation reactions;

C) methane steam reforming according to the reaction R4:

$$R4: \qquad CH_4 + H_2O = CO + 3H_2$$

and possibly:

D) the methane reforming reaction according to the following reaction scheme R8:

$$R8: \qquad CH_4 + CO_2 = 2CO + 2H_2$$

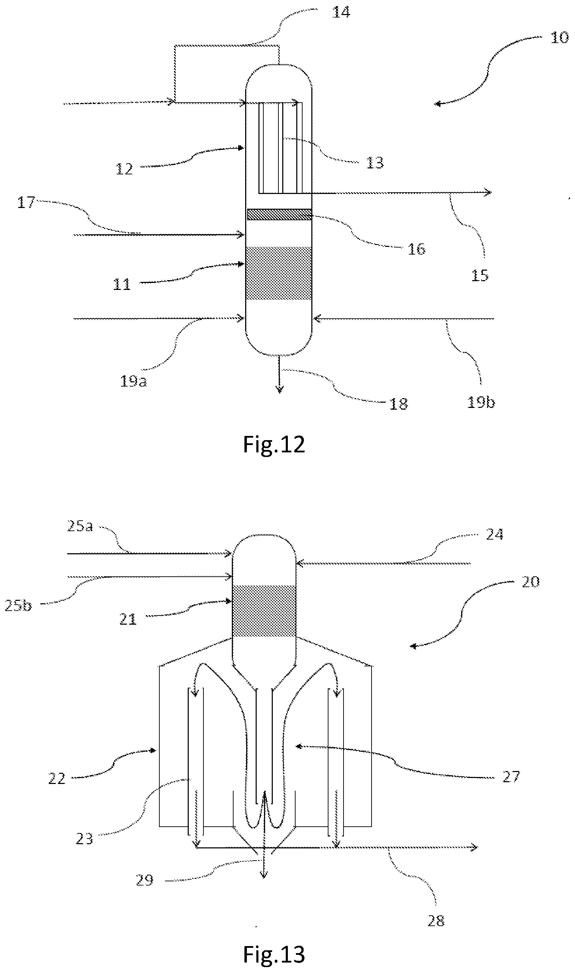

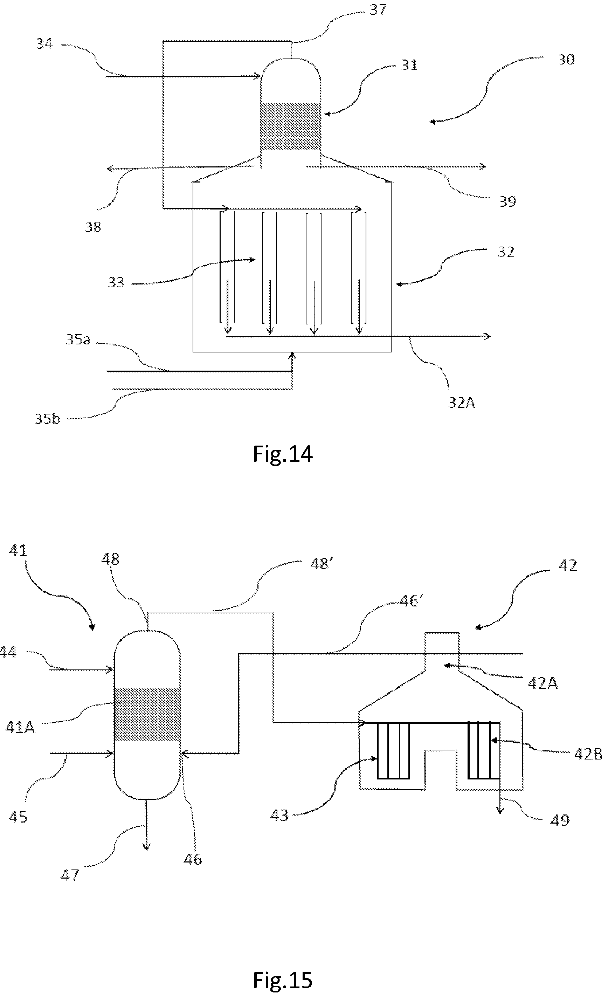

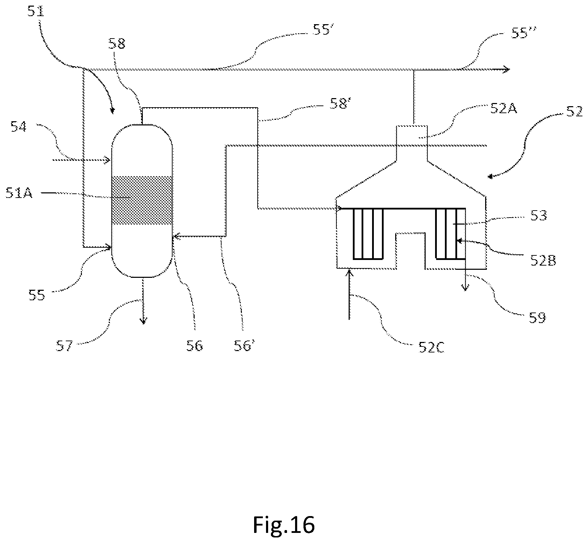

Specifically, such steps are carried out in a plant 10, 20, 30, 40, 50 illustrated in figures 12-16. Such a plant as well as the related steps carried out therein are described in detail in the international patent application related to GASIFORMING, reported above, and for this reason are not described in detail below. The plant 10, 20, 30, 40, 50 comprises a gasification section 11, 21, 31, 41, 51 and a reforming section 12, 22, 32, 42, 52 comprising a tube bundle 13, 23, 33, 43, 53 provided with a catalyst. Specifically:

i) the gasification section 11, 21, 31, and reforming section 12, 22, 32, are part of a single reactive unit 10, 20, 30, or the gasification section 41, 51 and the reforming section 42, 52 are two mutually physically distinct reactive units 40, 50.

ii) the gasification section 11, 21 or the reactive unit 41, provides the energy support to the respective reforming section 12, 22, or reactive unit 42, by virtue of the exothermic combustion reaction R9

$$R9: \qquad [-CH_2-] + 1,5O_2 = CO_2 + H_2O$$

or alternatively:

the section 32, the reactive reforming unit 52, provides the energy support to the respective section 31 or reactive gasification unit 51 by virtue of the exothermic reaction R10:

$$R10: \qquad CH_4 + 2O_2 = CO_2 + 2H_2O$$

When in the process according to the present invention in step d) it is desired to obtain a chemical with high added value, syngas is used as the starting material which is converted into methanol according to the following reaction R11:

$$R11: \qquad 2H_2 + CO \rightarrow CH_3OH$$

Subsequently if dimethyl ether is to be obtained, the methanol is converted to dimethyl ether according to the reaction R12

$$R12: \qquad 2CH_3OH \rightarrow CH_3OCH_3 + H_2O$$

Dimethyl ether can also be obtained by direct synthesis from syngas and not only from methanol dehydration.

If acetic acid is to be obtained, it is obtained according to the reaction R13:

$$R13: \qquad CH_3OH + CO \rightarrow CH_3COOH$$

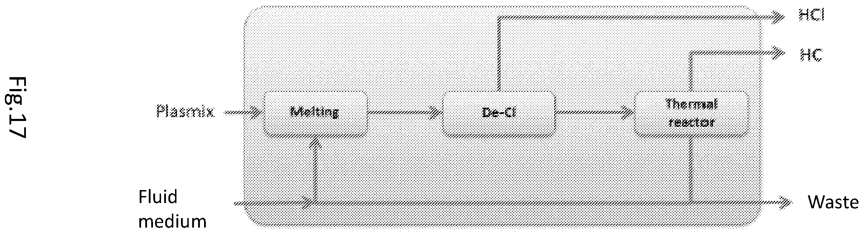

In accordance with a preferred embodiment, illustrated in figure 3, in which step d) is conducted, the conversion system is characterized by PLASBREAKER pyrolysis. In this case step d) is carried out in the absence of oxygen at a temperature between 410°C and 500°C and with residence times >5 minutes and $\leq$ 20 minutes, in which the reaction products comprise mainly low boiling hydrocarbons, and to a lesser extent hydrogen, naphtha, gasoline, jet fuel, gas oils, heavy oils, residues. It should be noted that the conversion step d) corresponds to step c) described in the relevant Italian patent application and carried out in the THERMAL REACTOR illustrated in figure 17 of the present patent application.

Preferably, the reactor where step d) is conducted in accordance with the present embodiment is a tubular reactor provided with multiple multi-step tubes.

There is further described even if it is not a further object of the present invention a system configured for carrying out the process described above. As mentioned during the description, each step of the process is carried out in a relative unit provided with structural features able to withstand the temperatures of the steps and the relative release of the products of the different reactions. Each unit is in fluid communication with the unit at which the next step of the process occurs. In detail, the plant comprises:

- a grinding unit COMMINATION where step a) occurs,
- a melting unit or melter unit MELTING where step b) occurs. Such a unit is configured to receive the ground material and possibly plasmix in input;
- a possible dehalogenation unit DE-HALOGENATION where step b') occurs in fluid communication with the MELTING unit;
- an electrolysis unit ELECTROLYSIS, possibly present in the case where the dehalogenation unit DE-HALOGENATION is present. Such an electrolysis unit ELECTROLYSIS is in fluid communication with the dehalogenation unit DE-HALOGENATION;
- a devulcanization unit DEVULCANIZATION in fluid communication with the melting unit MELTING or if present with the dehalogenation unit DE-HALOGENATION;
- an splitting unit H2 RECOVERY, SATS, SACS in fluid communication with the dehalogenation unit DE-HALOGENA-TION to receive $H_2S$ and then send $H_2$ to the dehalogenation unit DEVULCANIZATION. It should be noted that if the electrolysis unit is present, ELECTROLYSIS is in fluid communication with the dehalogenation unit DEVULCANIZA-TION to send $H_2$ produced together with that of the splitting unit H2 RECOVERY, SATS, SACS;
- a conversion unit CONVERSION, PLASBREAKER or GASFORMING, in fluid communication with the dehalogenation unit DE-HALOGENATION to receive the molten plastic. Such conversion unit CONVERSION, PLASBREAKER, or GASFORMING can feature a tube bundle and related heat exchangers in order to harness the thermal energy of the conversion products for the melting, de-halogenation and/or splitting unit.

## Claims

1. Process for chemically treating scrap tyres, comprising:

   a) grinding the tyres and removing the inorganic material;
   b) melting the material from step a);
   c) devulcanizing the molten material from step b) according to the reaction R1

   $$R1: \qquad [-CH_2-]n-S-[-CH_2-]m + H_2 = [-CH_2-]n^* + [-CH_2-]m^* + H_2S$$

   where m and n indicate non-identical lengths of the macromolecules in terms of carbon atoms and the asterisk indicates the possible presence of at least one olefin unsaturation, at a temperature comprised between 300 and 400°C, at a pressure comprised between 10 and 150 bar, said reaction R1 being possibly associated with the saturation reaction R2 of said possible at least one olefin unsaturation:

   $$R2: \qquad [-CH_2-]n^* + [-CH_2-]m^* + H_2 = [-CH_2-]n + [-CH_2-]m$$

   d) converting the plastics from step c) into products of commercial value,

   **wherein**

   step c) is carried out in the presence of catalysts based on cobalt oxide or molybdenum oxide possibly supported on alumina in a homogeneous or heterogeneous fixed or mobile (fluidized or dragged) bed reactor
   this process comprises a step c-1) wherein a thermal, catalytic or electrochemical splittingis carried out of hydrogen sulphide formed in the reaction R1 of step c) to hydrogen and sulphur according to the reaction R3:

   $$R3: \qquad H_2S = H_2 + 1/x\ Sx$$

   and the formed hydrogen is recycled r to step c);
   the commercial products obtained in step d) are selected from:

- linear or branched light and higher boiling saturated or unsaturated:

hydrocarbons, paraffinic or naphthenic/ aromatic hydrocarbons;

- syngas having different S ratios (H2 over CO and CO2) in co-presence of light hydrocarbons and olefins;

- highly added values chemicals selected from methanol, dimethyl ether and acetic acid-.

2. Process according to claim 1, wherein step c) is carried out at a temperature between 300 and 350°C at a pressure between 10 and 150 bar, more preferably between 50 and 100 bar.

3. Process according to claim 1, wherein, when the splitting reaction is of the thermal type it is carried out in an oven comprising:

- a radiant zone (2), and a convective zone (3),
- a first (4) and a second (5) series of tubes in which at least two segregated process flows of gas (A) and (B) pass respectively, of which the first series of tubes (4) is provided with a catalyst while the second series of tubes (5) is made of material resistant to acidic gases wherein;

• the first process flow (A) enters said oven (1) from the convective zone (3) and passing through said first set of tubes (4) exits from said oven from the radiant zone (2), or alternatively said first process flow (A) enters said oven (1) from the radiant zone (2) and, passing through the first set of tubes (4), exits from the radiant zone (2);

• the second process flow (B) enters said oven (1) from the convective zone (3) or the radiant zone (2) and, passing through said second series of tubes (5), exits from said oven (1) from the radiant zone (3), and wherein the flow (B) entering said oven comprises hydrogen sulphide passing through said second series of tubes (5), where the reaction R3 (SATS) occurs at the radiant zone (2), while the flow (A) comprising methane and water, passes through said first series of tubes (4), said first series of tubes comprising a tube bundle filled with catalyst and arranged at the radiant zone (2), where the reaction R4 (SMR) is carried out

$$R4: \quad CH_4 + H_2O = CO + 3H_2$$

4. Process according to claim 1, wherein when the splitting reaction is of the catalytic type, an oven (1') is carried out

comprising:

- a radiant zone (2'),
- a convective zone (3'),
- a first (4') and a second set of tubes (5'), in which two segregated process flows of gas (A') and (B') pass respectively, of which the second set of tubes (5') is made of material resistant to acidic gases and is provided with a catalyst,

in which oven:

• said first process flow (A') enters said oven (1') from the convective zone (3') and, passing through said first series of tubes (4'), exits from said oven from the radiant zone (2'), or alternatively said first process flow (A') enters said oven (1') from the radiant zone (2') and, passing through the first series of tubes (4), exits from said oven from the radiant zone (2');

• said process flow (B'), enters said oven (1') from the convective zone (3') passing through said second set of tubes (5') and exits from said oven (1') from the convective zone (3'),

and wherein:

the second flow (B') comprising $H_2S$ passes in the second series of tubes (5'), where, at the convective zone (3'), the reaction R3 (SACS) is carried out; while the flow (A') comprising methane and water, passes through said first series of tubes (4'), said first series of tubes comprising a tube bundle filled with catalyst and arranged at the radiant zone (2'), where the reaction R4 (SMR) is carried out

$$R4: \quad CH_4 + H_2O = CO + 3H_2$$

5. Process according to any one of claims 1-4, comprising after the melting step b) and before the devulcanizing step c) a dehalogenating step b'), preferably dechlorinating, with hydrochloric acid formation according to the reaction R5

$$R5: \qquad 2\ HCl = H_2 + Cl_2$$

if it is desired to chemically convert the tyre rubber with the conventional-type waste plastic (plasmix).

6. Process according to claim 5, wherein said dehalogenation is carried out at a temperature between 300 and 350°C at residence times higher than 3 minutes, preferably between 5 and 10 minutes.

7. Process according to claim 5 or 6, wherein the plasmix is supplied to the melter, in step b) of melting.

8. Process according to any one of claims 5-7, wherein HCl is electrolysed to obtain hydrogen which is added in step c) and $Cl_2$.

9. Process according to any one of claims 1-8, wherein, when the commercial product to be obtained is syngas possibly associated with higher hydrocarbons, oligomers and olefins, step d) comprises:

A) gasification of the pretreated polymers according to the following reaction scheme R6:

$$R6: \qquad [-CH_2-] + H_2O = CO + 2H_2$$

B) hydrogenation of said polymers pretreated with higher hydrocarbons and methane with the hydrogen produced in R6, according to the following reaction scheme R7:

$$R7: \qquad [-CH_2-]\ n + H_2 = Cn\ H(2n+2);$$

wherein n is an integer from 1 to 3, said reaction R7 possibly being combined with oligomer and olefin formation reactions;

C) methane steam reforming according to the reaction R4:

$$R4: \qquad CH_4 + H_2O = CO + 3H_2$$

and possibly:

D) the methane reforming reaction according to the following reaction scheme R8:

$$R8: \qquad CH_4 + CO_2 = 2CO + 2H_2$$

said process being conducted in a plant (10), (20), (30), (40), (50) comprising a gasification section (11), (21), (31), (41), (51) and a reforming section (12), (22), (32), (42), (52) comprising a tube bundle (13), (23), (33), (43), (53) provided with a catalyst, wherein:

i) said gasification section (11), (21), (31), and reforming section (12), (22), (32), are part of a single reactive unit (10), (20), (30), or said gasification section (41), (51) and said reforming section (42), (52) are two mutually physically distinct reactive units (40), (50).
ii) the gasification section (11), (21) or the reactive unit (41), provides the energy support to the respective reforming section (12), (22), or reactive unit (42), by virtue of the exothermic combustion reaction R9

$$R9: \qquad [-CH_2-] + 1,5O_2 = CO_2 + H_2O$$

or alternatively:

the section (32), the reactive reforming unit (52), provides the energy support to the respective section (31) or reactive gasification unit (51)

by virtue of the exothermic reaction R10

$$R10: \quad CH_4 + 2O_2 = CO_2 + 2H_2O$$

10. Process according to any one of claim 1-9, wherein the syngas is converted to methanol according to the following reaction scheme R11:

$$R11: \quad 2H_2 + CO \rightarrow CH_3OH$$

11. Process according to claim 10, wherein methanol is converted to dimethyl ether according to the reaction scheme R12

$$R12: \quad 2CH_3OH \rightarrow CH_3OCH_3 + H_2O$$

12. Process according to claim 10, wherein acetic acid is prepared according to the scheme R13:

$$R13: \quad CH_3OH + CO \rightarrow CH_3COOH$$

13. Process according to any one of claims 1-8, wherein step d) is carried out in the absence of oxygen at a temperature between 410°C and 500°C and with residence times >5 minutes and $\leq$ 20 minutes, wherein the reaction products comprise mainly low boiling hydrocarbons, and to a lesser extent hydrogen, naphtha, gasoline, jet fuel, gas oils, heavy oils, residues.

14. Process according to claim 13, wherein the reactor where step d) is carried out is a tubular reactor equipped with multiple multipass tubes.

15. Process according to anyone of claims 1-8, wherein the dimethyl ether can also be produced by direct synthesis from syngas.

**Patentansprüche**

1. Verfahren zur chemischen Behandlung von Altreifen, umfassend:

   a) Schleifen der Reifen und Entfernen des anorganischen Materials;
   b) Schmelzen des Materials aus Schritt a);
   c) Devulkanisieren des geschmolzenen Materials aus Schritt b) gemäß der Reaktion R1

$$R1: \quad [-CH_2-]n-S-[-CH_2-]m + H_2 = [-CH_2-]n^* + [-CH_2-]m^* + H_2S$$

   wobei m und n nicht identische Längen der Makromoleküle in Bezug auf Kohlenstoffatome angeben und das Sternchen das mögliche Vorhandensein mindestens einer Olefin-Ungesättigtheit bei einer Temperatur zwischen 300 und 400 °C und einem Druck zwischen 10 und 150 bar angibt, wobei die Reaktion RI möglicherweise mit der Sättigungsreaktion R2 der möglichen mindestens einen Olefin-Ungesättigtheit assoziiert ist:

$$R2: \quad [-CH_2-]n^* + [-CH_2-]m^* + H_2 = [-CH_2-]n + [-CH_2-]m$$

   Umwandeln der Kunststoffe aus Schritt c) in Produkte von Handelswert, **wobei**
   Schritt c) in Gegenwart von Katalysatoren auf der Basis von Kobaltoxid oder Molybdänoxid, gegebenenfalls geträgert auf Aluminiumoxid, in einem homogenen oder heterogenen Festbett- oder Mobilbettreaktor (Wirbelschicht oder Schleppbett) durchgeführt wird,
   dieses Verfahren einen Schritt c-1) umfasst, in dem eine thermische, katalytische oder elektrochemische Spaltung von Schwefelwasserstoff, der in der Reaktion R1 von Schritt c) gebildet wird, zu Wasserstoff und Schwefel gemäß der Reaktion R3 durchgeführt wird:

$$R3: \qquad H_2S = H_2 + 1/x\ Sx$$

und der gebildete Wasserstoff r zu Schritt c) zurückgeführt wird;
die in Schritt d) erhaltenen Handelsprodukte ausgewählt werden, aus:

- linear oder verzweigt, leicht und höhersiedend, gesättigt oder ungesättigt: Kohlenwasserstoffen, paraffinischen oder naphthenische/aromatischen Kohlenwasserstoffen;
- Synthesegas mit unterschiedlichen Verhältnissen (H2 über CO und CO2) in Co-Präsenz von leichten Kohlenwasserstoffen und Olefinen;
- Chemikalien mit hohem Zusatzwert, ausgewählt aus Methanol, Dimethylether und Essigsäure.

2. Verfahren nach Anspruch **1,** wobei Schritt c) bei einer Temperatur zwischen 300 und 350 °C bei einem Druck zwischen 10 und 150 bar, bevorzugter zwischen 50 und 100 bar, durchgeführt wird.

3. Verfahren nach Anspruch **1,** wobei, wenn die Spaltungsreaktion vom thermischen Typ ist, sie in einem Ofen durchgeführt wird, umfassend:

- eine Strahlungszone (2) und eine Konvektionszone (3),
- eine erste (4) und eine zweite (5) Reihe von Rohren, in denen jeweils mindestens zwei getrennte Prozessgasströme (A) und **(B)** verlaufen, von denen die erste Reihe von Rohren (4) mit einem Katalysator versehen ist, während die zweite Reihe von Rohren (5) aus einem gegen saure Gase beständigen Material besteht, wobei;

• der erste Prozessstrom (A) in den Ofen **(1)** aus der Konvektionszone (3) eintritt und indem er durch den ersten Satz von Rohren (4) durchläuft, aus dem Ofen aus der Strahlungszone (2) austritt, oder alternativ der erste Prozessstrom (A) in den Ofen **(1)** aus der Strahlungszone (2) eintritt und indem er durch den ersten Satz von Rohren (4) durchläuft, aus der Strahlungszone (2) austritt;
• der zweite Prozessstrom **(B)** in den Ofen **(1)** aus der Konvektionszone (3) oder der Strahlungszone (2) eintritt und, indem er durch die zweite Reihe von Rohren (5) durchläuft, aus dem Ofen (1) aus der Strahlungszone (3) austritt,
und wobei der in den Ofen eintretende Strom (B) Schwefelwasserstoff umfasst, der durch die zweite Reihe von Rohren (5) durchläuft, wo die Reaktion R3 (SATS) in der Strahlungszone (2) stattfindet, während der Strom (A), der Methan und Wasser umfasst, durch die erste Reihe von Rohren (4) durchläuft, wobei die erste Reihe von Rohren ein mit Katalysator gefülltes Rohrbündel umfasst, das in der Strahlungszone (2) angeordnet ist, wo die Reaktion R4 (SMR) durchgeführt wird.

$$R4: \qquad CH_4 + H_2O = CO + 3H_2$$

4. Verfahren nach Anspruch 1, wobei, wenn die Spaltungsreaktion vom katalytischen Typ ist, ein Ofen (1') durchgeführt wird

umfassend:

- eine Strahlungszone (2'),
- eine Konvektionszone (3'),
- einen ersten (4') und einen zweiten Satz von Rohren (5'), in denen jeweils zwei getrennte Prozessgasströme (A') und (B') durchlaufen, von denen der zweite Satz von Rohren (5') aus einem gegen saure Gase beständigen Material besteht und mit einem Katalysator versehen ist,

in welchem Ofen:

• der erste Prozessstrom (A') in den Ofen (1') aus der Konvektionszone (3') eintritt und indem er durch die erste Reihe von Rohren (4') durchläuft, aus dem Ofen aus der Strahlungszone (2') austritt, oder alternativ der erste Prozessstrom (A') in den Ofen (1') aus der Strahlungszone (2') eintritt und indem er durch die erste Reihe von Rohren (4) durchläuft, aus dem Ofen aus der Strahlungszone (2') austritt;
• der Prozessstrom (B') in den Ofen (1') aus der Konvektionszone (3') eintritt, indem er durch den zweiten Satz von Rohren (5') durchläuft und aus dem Ofen (I') aus der Konvektionszone (3') austritt,

und wobei:

der zweite H2S umfassende Strom (B') in der zweiten Reihe von Rohren (5') durchläuft, wo an der Konvektionszone (3') die Reaktion R3 (SACS) durchgeführt wird; während der Methan und Wasser umfassende Strom (A') durch die erste Reihe von Rohren (4') durchläuft, wobei die erste Reihe von Rohren ein mit Katalysator gefülltes Rohrbündel umfasst, das an der Strahlungszone (2') angeordnet ist, wo die Reaktion R4 (SMR) durchgeführt wird.

$$R4: \quad CH_4 + H_2O = CO + 3H_2$$

5. Verfahren nach einem der Ansprüche 1-4, umfassend nach dem Schmelzschritt b) und vor dem Devulkanisierungsschritt c) einen Dehalogenierungsschritt b'), vorzugsweise eine Dechlorierung, mit Salzsäurebildung gemäß der Reaktion R5

$$R5: \quad 2\,HCl = H_2 + Cl_2$$

wenn es gewünscht wird, den Reifenkautschuk mit dem konventionellen Abfallkunststoff (Plasmix) chemisch umzuwandeln.

6. Verfahren nach Anspruch 5, wobei die Dehalogenierung bei einer Temperatur zwischen 300 und 350°C bei Verweilzeiten von mehr als 3 Minuten, vorzugsweise zwischen 5 und 10 Minuten, durchgeführt wird.

7. Verfahren nach Anspruch 5 oder 6, wobei der Plasmix im Schritt b) des Schmelzens dem Schmelzer zugeführt wird.

8. Verfahren nach einem der Ansprüche 5-7, wobei HCl elektrolysiert wird, um Wasserstoff, der in Schritt c) zugegeben wird, und $Cl_2$ zu erhalten.

9. Verfahren nach einem der Ansprüche 1-8, wobei, wenn das zu erhaltende Handelsprodukt Synthesegas ist, das möglicherweise mit höheren Kohlenwasserstoffen, Oligomeren und Olefinen assoziiert ist, Schritt d) umfasst:

A) Vergasung der vorbehandelten Polymere nach dem folgenden Reaktionsschema R6:

$$R6: \quad [-CH_2-] + H_2O = CO + 2H_2$$

B) Hydrierung der mit höheren Kohlenwasserstoffen und Methan vorbehandelten Polymere mit dem in R6 produzierten Wasserstoff gemäß dem folgenden Reaktionsschema R7:

$$R7: \quad [-CH_2-]\,n + H_2 = Cn\,H(2n+2);$$

wobei n eine ganze Zahl von 1 bis 3 ist, wobei die Reaktion R7 möglicherweise mit Oligomer- und Olefinbildungsreaktionen kombiniert wird;

C) Methandampfreformierung gemäß der Reaktion R4:

$$R4: \quad CH_4 + H_2O = CO + 3H_2$$

und möglicherweise:

D) die Methanreformierungsreaktion gemäß dem folgenden Reaktionsschema

$$R8: \quad CH4 + CO_2 = 2CO + 2H2$$

wobei das Verfahren in einer Anlage (10), (20), (30), (40), (50) durchgeführt wird, die einen Vergasungsabschnitt (11), (21), (31), (41), (51) und einen Reformierungsabschnitt (12), (22), (32), (42), (52) umfasst, der ein mit einem Katalysator versehenes Rohrbündel (13), (23), (33), (43), (53) umfasst, wobei:

i) der Vergasungsabschnitt (11), (21), (31), und der Reformierungsabschnitt (12), (22), (32), Teil einer einzigen Reaktiveinheit (10), (20), (30), oder der Vergasungsabschnitt (41), (51) sind und der Reformierungsabschnitt (42), (52) sind zwei voneinander physikalisch getrennte Reaktiveinheiten (40), (50).
ii) der Vergasungsabschnitt (11), (21) oder die Reaktiveinheit (41) die Energieunterstützung für den jeweiligen Reformierungsabschnitt (12), (22) oder die Reaktiveinheit (42) aufgrund der exothermen Ver-brennungsreaktion R9 bereitstellt

$$R9: \quad [-CH_2-] + 1{,}5O_2 = CO_2 + H_2O$$

oder alternativ:

der Abschnitt (32), die Reaktivreformierungseinheit (52), die Energieunterstützung für den jeweiligen Abschnitt (31) oder die Reaktivvergasungseinheit (51)
aufgrund der exothermen Reaktion R10 bereitstellt.

$$R10: \quad CH_4 + 2O_2 = CO_2 + 2H_2O$$

10. Verfahren nach einem der Ansprüche 1 bis 9, wobei das Synthesegas gemäß dem folgenden Reaktionsschema R11 in Methanol umgewandelt wird:

$$R11: \quad 2H_2 + CO \rightarrow CH_3OH$$

11. Verfahren nach Anspruch 10, wobei Methanol gemäß dem Reaktionsschema R12 in Dimethylether umgewandelt wird.

$$R12: \quad 2CH_3OH \rightarrow CH_3OCH_3 + H_2O$$

12. Verfahren nach Anspruch 10, wobei die Essigsäure gemäß dem Schema R13 vorbereitet wird:

$$R13: \quad CH_3OH + CO \rightarrow CH_3COOH$$

13. Verfahren nach einem der Ansprüche 1-8, wobei Schritt d) in Abwesenheit von Sauerstoff bei einer Temperatur zwischen 410°C und 500°C und mit Verweilzeiten >5 Minuten und $\leq$ 20 Minuten durchgeführt wird, wobei die Reaktionsprodukte hauptsächlich niedrigsiedende Kohlenwasserstoffe und in geringerem Maße Wasserstoff, Naphtha, Benzin, Düsentreibstoff, Gasöle, Schweröle und Rückstände umfassen.

14. Verfahren nach Anspruch 13, wobei der Reaktor, in dem Schritt d) durchgeführt wird, ein Rohrreaktor ist, der mit mehreren Multipass-Rohren ausgestattet ist.

15. Verfahren nach einem der Ansprüche 1-8, wobei der Dimethylether auch durch Direktsynthese aus Synthesegas hergestellt werden kann.

**Revendications**

1. Procédé de traitement chimique de pneus usagés, comprenant :

a) le broyage des pneus et l'élimination des matières inorganiques ;
b) la fonte de la matière obtenue à l'étape a) ;
c) la dévulcanisation de la matière fondue de l'étape b) selon la réaction R1

$$R1: \quad [-CH_2-]n\text{-}S\text{-}[-CH_2-]m + H_2 = [-CH_2-]n^* + [-CH_2-]m^* + H_2S$$

où m et n indiquent des longueurs non identiques des macromolécules en termes d'atomes de carbone et l'astérisque indique la présence éventuelle d'au moins une insaturation en oléfine, à une température comprise entre 300 et 400 °C, à une pression comprise entre 10 et 150 bar, ladite réaction RI étant éventuellement associée à la réaction de saturation R2 de ladite éventuelle au moins une insaturation en oléfine :

$$R2: \quad [-CH_2-]n^* + [-CH_2-]m^* + H_2 = [-CH_2-]n + [-CH_2-]m$$

la transformation des matières plastiques de l'étape c) en produits de valeur commerciale,
où
l'étape c) est réalisée en présence de catalyseurs à base d'oxyde de cobalt ou d'oxyde de molybdène éventuellement supportés par de l'alumine dans un réacteur homogène ou hétérogène à lit fixe ou mobile (fluidisé ou entraîné)
ce procédé comprend une étape c-1) au cours de laquelle une scission thermique, catalytique ou électrochimique est effectuée sur le sulfure d'hydrogène formé dans la réaction R1 de l'étape c) en hydrogène et en soufre selon la réaction R3 :

$$R3: \quad H_2S = H_2 + 1/x \, Sx$$

et l'hydrogène formé est recyclé r à l'étape c) ;
les produits commerciaux obtenus à l'étape d) sont choisis parmi

- linéaires ou ramifiés, saturés ou insaturés à point d'ébullition élevé :
- hydrocarbures paraffiniques ou naphténiques/aromatiques ;
- gaz de synthèse présentant différents rapports (H2 sur CO et CO2) en coprésence d'hydrocarbures légers et d'oléfines ;
- produits chimiques à forte valeur ajoutée choisis parmi le méthanol, l'éther diméthylique et l'acide acétique.

2. Procédé selon la revendication 1, où l'étape c) est effectuée à une température comprise entre 300 et 350 °C à une pression comprise entre 10 et 150 bar, plus de préférence entre 50 et 100 bar.

3. Procédé selon la revendication **1,** où, lorsque la réaction de scission est de type thermique, elle est effectuée dans un four comprenant :

- une zone de rayonnement (2), et une zone convective (3),
- une première (4) et une seconde (5) série de tubes dans lesquels passent respectivement au moins deux flux de gaz (A) et **(B)** séparés, dont la première série de tubes (4) est pourvue d'un catalyseur tandis que la seconde série de tubes (5) est constituée d'un matériau résistant aux gaz acides, dans lequel ;

• le premier flux de processus (A) entre dans ledit four (1) à partir de la zone convective (3) et, en passant par ledit premier ensemble de tubes (4), sort dudit four à partir de la zone de rayonnement (2), ou alternativement, ledit premier flux de processus (A) entre dans ledit four **(1)** à partir de la zone de rayonnement (2) et, en passant par le premier ensemble de tubes (4), sort de la zone de rayonnement (2) ;
• le deuxième flux de processus **(B)** entre dans ledit four **(1)** à partir de la zone convective (3) ou de la zone de rayonnement (2) et, en passant par ladite deuxième série de tubes (5), sort dudit four (1) à partir de la zone de rayonnement (3),
et dans lequel le flux (B) entrant dans ledit four comprend du sulfure d'hydrogène traversant ladite deuxième série de tubes (5), où la réaction R3 (SATS) se produit dans la zone de rayonnement (2), tandis que le flux (A) comprenant du méthane et de l'eau traverse ladite première série de tubes (4), ladite première série de tubes comprenant un faisceau de tubes rempli de catalyseur et disposé dans la zone de rayonnement (2), où la réaction R4 (SMR) est effectuée.

$$R4: \quad CH_4 + H_2O = CO + 3H_2$$

4. Procédé selon la revendication 1, dans lequel lorsque la réaction de scission est de type catalytique, un four (I') est effectué

comprenant :

- une zone de rayonnement (2'),
- une zone convective (3'),
- un premier (4') et un second ensemble de tubes (5'), dans lesquels passent respectivement deux flux de gaz (A') et (B') séparés, dont le second ensemble de tubes (5') est constitué d'un matériau résistant aux gaz acides et est pourvu d'un catalyseur, four dans lequel :

• ledit premier flux de processus (A') entre dans ledit four (I') à partir de la zone convective (3') et, en passant par ladite première série de tubes (4'), sort dudit four à partir de la zone de rayonnement (2'), ou alternativement ledit premier flux de processus (A') entre dans ledit four (1') à partir de la zone de rayonnement (2') et, en passant par la première série de tubes (4), sort dudit four à partir de la zone de rayonnement (2')

• ledit flux de processus (B'), entre dans ledit four (I') à partir de la zone convective (3') en passant par ledit deuxième ensemble de tubes (5') et sort dudit four (I') à partir de la zone convective (3'),

et dans laquelle :

le deuxième flux (B') comprenant du H2S passe dans la deuxième série de tubes (5'), où, dans la zone convective (3'), la réaction R3 (SACS) est effectuée ; tandis que le flux (A') comprenant du méthane et de l'eau passe dans ladite première série de tubes (4'), ladite première série de tubes comprenant un faisceau de tubes rempli de catalyseur et disposé dans la zone de rayonnement (2'), où la réaction R4 (SMR) est effectuée

$$R4: \quad CH_4 + H_2O = CO + 3H_2$$

5. Procédé selon l'une quelconque des revendications 1 à 4, comprenant après l'étape de fonte b) et avant l'étape de dévulcanisation c) une étape de déshalogénation b'), de préférence de déchloration, avec formation d'acide chlorhydrique selon la réaction R5

$$R5: \quad 2\,HCl = H_2 + Cl_2$$

si l'on souhaite transformer chimiquement le caoutchouc du pneu avec des déchets plastiques de type conventionnel (plasmix).

6. Procédé selon la revendication 5, dans lequel ladite déshalogénation est effectuée à une température comprise entre 300 et 350 °C à des temps de séjour supérieurs à 3 minutes, de préférence entre 5 et 10 minutes.

7. Procédé selon la revendication 5 ou 6, dans lequel le plasmix est fourni au fondoir à l'étape b) de la fonte.

8. Procédé selon l'une des revendications 5 à 7, dans lequel HCl est électrolysé pour obtenir de l'hydrogène qui est ajouté à l'étape c) et $Cl_2$.

9. Procédé selon l'une quelconque des revendications 1 à 8, dans lequel, lorsque le produit commercial à obtenir est du gaz de synthèse éventuellement associé à des hydrocarbures supérieurs, des oligomères et des oléfines, l'étape d) comprend :

A) la gazéification des polymères prétraités selon le schéma réactionnel R6 :

$$R6: \quad [\text{-}CH_2\text{-}] + H_2O = CO + 2H_2 \quad B)$$

l'hydrogénation desdits polymères prétraités avec des hydrocarbures supérieurs et du méthane avec l'hydrogène produit en R6, selon le schéma réactionnel R7 suivant :

$$R7: \quad [\text{-}CH_2\text{-}]\,n + H_2 = Cn\,H(2n+2);$$

où n est un nombre entier de 1 à 3, ladite réaction R7 étant éventuellement combinée avec des réactions de formation d'oligomères et d'oléfines ;

C) le reformage du méthane à la vapeur selon la réaction R4 :

$$R4: \quad CH_4 + H_2O = CO + 3H_2$$

EP 4 301 808 B1

et éventuellement :
D) la réaction de reformage du méthane selon le schéma réactionnel suivant

R8:  $CH_4 + CO_2 = 2CO + 2H2$

ledit procédé étant conduit dans une installation (10), (20), (30), (40), (50) comprenant une section de gazéification (11), (21), (31), (41), (51) et une section de reformage (12), (22), (32), (42), (52) comprenant un faisceau de tubes (13), (23), (33), (43), (53) pourvu d'un catalyseur, dans lequel :

i) ladite section de gazéification (11), (21), (31), et ladite section de reformage (12), (22), (32), font partie d'une seule unité réactive (10), (20), (30), ou ladite section de gazéification (41), (51) et ladite section de reformage (42), (52) sont deux unités réactives (40), (50) physiquement distinctes l'une de l'autre.
ii) la section de gazéification (11), (21) ou l'unité réactive (41) fournit l'énergie nécessaire à la section de reformage (12), (22) ou à l'unité réactive (42), en vertu de la réaction de combustion exothermique R9

R9:  $[-CH_2-] + 1,5O_2 = CO_2 + H_2O$

ou alternativement :

la section (32), l'unité de reformage réactif (52), fournit l'énergie nécessaire à la section (31) ou à l'unité de gazéification réactive (51) respective
en vertu de la réaction exothermique R10

R10:  $CH_4 + 2O_2 = CO_2 + 2H_2O$

10. Procédé selon l'une des revendications 1 à 9, dans lequel le gaz de synthèse est converti en méthanol selon le schéma réactionnel R11 suivant :

R11:  $2H_2 + CO \rightarrow CH_3OH$

11. Procédé selon la revendication 10, dans lequel le méthanol est converti en éther diméthylique selon le schéma de réaction R12

R12:  $2CH_3OH \rightarrow CH_3OCH_3 + H_2O$

12. Procédé selon la revendication 10, dans lequel l'acide acétique est préparé selon le schéma suivant R13 :

R13:  $CH_3OH + CO \rightarrow CH_3COOH$

13. Procédé selon l'une quelconque des revendications 1-8, dans lequel l'étape d) est effectuée en l'absence d'oxygène à une température comprise entre 410 °C et 500 °C et avec des temps de séjour > 5 minutes et ≤ 20 minutes, les produits de la réaction comprenant principalement des hydrocarbures à bas point d'ébullition, et dans une moindre mesure de l'hydrogène, du naphta, de l'essence, du carburéacteur, des gazoles, des huiles lourdes, des résidus.

14. Procédé selon la revendication 13, dans lequel le réacteur dans lequel l'étape d) est effectuée est un réacteur tubulaire équipé de tubes à passages multiples.

15. Procédé selon l'une des revendications 1 à 8, dans lequel l'éther diméthylique peut également être produit par synthèse directe à partir de gaz de synthèse.

18

Fig. 1

EP 4 301 808 B1

Vulcanized plastic wastes → C/H/S → Comminution → Metals, sand, stones

Energy → Melting

Hydrogen  recycle

$H_2$ → Devulcanization → SACS/SATS

$O_2$ → GASIFORMING

**Methanol
DME
EU incentives**

$S_2$

**Fig. 2**

Fig. 3

Fig. 4

Fig. 5

Fig. 6

Fig. 7

Fig. 8

Fig. 9

Fig. 10

STEAM, CH4

SMR

SACS

H2S

CO, H2

S, H2

Fig.11

Fig.12

Fig.13

Fig.14

Fig.15

Fig.16

Fig.17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006116431 A1
- US 2020181372 A1
- US 4200611631 A
- WO 2020234708 A1
- WO 2020234709 A1
- WO 2021019433 A1
- IT 102020000019951